# EUROPEAN PATENT SPECIFICATION

(11) **EP 3 293 923 B1**
(45) Date of publication and mention of the grant of the patent: **22.07.2020**
(21) Application number: 16382420.4
(22) Date of filing: 12.09.2016
(51) Int. Cl.: H04L 12/58

(54) **METHOD AND DEVICE FOR MEDIA PACKET DISTRIBUTION OVER MULTIPLE ACCESS WIRELESS COMMUNICATION NETWORK**
VERFAHREN UND VORRICHTUNG FÜR MEDIENPAKETVERTEILUNG ÜBER EIN DRAHTLOSKOMMUNIKATIONSNETZWERK MIT MEHREREN ZUGÄNGEN
PROCÉDÉ ET DISPOSITIF DE DISTRIBUTION DE PAQUETS SUPPORTS SUR RÉSEAU DE COMMUNICATION SANS FIL À ACCÈS MULTIPLE

(43) Date of publication of application: 14.03.2018
(73) Proprietor: Alcatel-Lucent España, 28050 Madrid (ES)
(72) Inventor: Fernandez Duran, Alfonso, 28050 Madrid (ES); Sanjuan Flores, Tomas, 28050 Madrid (ES)
(74) Representative: Herrero & Asociados, S.L.

(56) References cited:
- US-A1- 2010 268 761
- US-A1- 2011 228 781
- US-A1- 2013 132 603
- US-A1- 2015 244 658

## Description

### FIELD OF THE INVENTION

The present invention relates to the field of telecommunications. In particular, the present invention relates to methods and devices for media packet distribution over multiple access wireless communication network.

### BACKGROUND

Nowadays, streaming services over wireless systems demand high capacity that in cases as multimedia streaming over wireless interfaces, like WiFi, to several clients simultaneously becomes very inefficient in the usage of the radio resources due to the protocol overheads.

This is especially critical when offering High Definition (HD) or Ultra High Definition Video (4K) through a wireless network. Sending continuous data packet flows to several wireless clients imply restarting the protocol mechanisms and overheads for every packet sent to a different client, thus reducing the capacity.

Prior art offers some techniques for streaming over wireless, for example TCP-IP (Transfer Control Protocol over IP) packet flow enhancements by intercepting the TCP protocol and bandwidth messages. This applicable only to TCP but not to UDP (User Datagram Protocol) which is very common in live video streaming for example. UDP packets could in turn be unicast, which refers to sending information to a single network destination identified by a unique address, or multicast, which refers to a group communication where information is addressed to a group of network destinations simultaneously. But, since multicast is not very convenient for the adaptive wireless interfaces IEEE 802.11aa introduces a way to handle multicast as unicast flows with the so called Group Addressed Transmission Service (GATS). Thus, the performance of the air interface is improved to a point where it is comparable to the pure unicast.

It is also remarkable the enhancements on some of the guard times in the wireless interfaces as the one from IEEE802.11e. Traffic prioritization is improved, but not the throughput. Moreover, it requires the devices to support the corresponding standard, which is not mandatory.

On the other hand, they are known IEEE 802.11e techniques, like Trasmitter Optimization, (e.g.TXOP) that pre assign transmission opportunity time intervals to specific transmissions and wireless MAC packet aggregation to reduce the amount of overhead over the radio channels. However, devices are also required to support the corresponding standard, since it is not mandatory. These techniques may improve the throughput, but limited in down-link when several users are connected to the same Access Point.

Unfortunately, none of the mentioned techniques of prior art produce significant improvements when several users are having IPTV service simultaneously, since IPTV packets for a given client arrive to the Access Point in a very fragmented pace
US 2011/0228781 A1, Izenberg et al., 22.09.2011 discloses a combined hardware and software packet forwarding mechanism configured to process ingressing packets.

### SUMMARY

It is thus an object of embodiments of the present invention to propose a method and a device for transmission of content, which do not show the inherent shortcomings of the prior art.

Accordingly, embodiments relate to a method and device for media packet distribution over multiple access wireless communication network, performed by a distributing electronic device, comprising:
- receiving a data packets flow addressed to two or more different destination addresses;
- determining whether each packet of the received data packets flow is a media streaming packet;
- storing media streaming packets in buffer memories based on the destination address of each media streaming packet;
- sending all the media streaming packets stored in a buffer memory to a given destination address, when said buffer memory reaches a predefined maximum number of stored packets.

Correlatively, embodiments relates to a distributing electronic device comprising means configured for:
- receiving a data packets flow addressed to two or more different destination addresses;
- determining whether each packet of the received data packet flow is a media streaming packet;
- storing each media streaming packet in buffer memories based on the destination address of each media streaming packet;
- sending all the media streaming packets stored in a buffer memory to a given destination address, when said buffer memory reaches a predefined maximum number of stored packets.

Determining whether a packet is a media streaming packet may be based on statistical analysis of packet size and packet interarrival times per destination address.

Sending all the media streaming packets stored in a buffer memory to a given destination address may comprises adding a common header to the all media streaming packets, wherein said packet common header indicates a number of packets and a destination address.

According to some embodiments, storing media streaming packets in buffer memories based on the destination address of each media streaming packet comprises storing media streaming packets with a non-local destination addresses together in a certain buffer memory.

According to some embodiments, the certain buffer memory containing media streaming packets with a non-local destination address has preference to be sent to another access point of the multiple access wireless communication network before buffer memories containing media streaming packets with local destination addresses.

Embodiments relate to a computer program comprising instructions for performing the method above when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic view of a residential gateway device receiving an IPTV data packets flow addressed to different clients.
Figure 2 is a block diagram of a packet video distribution over a multiple access wireless communication network,
Figure 3 schematically represents the outcome of the process of figure 2, and
Figure 4 is a schematic view of one embodiment where a meshed network is involved.

### DESCRIPTION OF EMBODIMENTS

What is defined in the following embodiments is provided to help fully understand the invention. Furthermore, the description of functions and elements that are well known in the state of the arte is omitted for the sake of clarity and concision.

In the proposed solution, the traffic capacity is increased for the same bandwidth when conveying streaming type of traffic through a wireless network to several wireless clients. The capacity increase in terms of simultanous users could be several times the maximum without this solution. Another advantage is that it is not necessary to modify the wireless interface, since it is a pre processing of packets, being it then compatible to existing wireless systems.

Given a standard wireless network where any kind of data packets are flowing, according to one embodiment, the proposed solution comprises detecting whether each packet of the data packets flow is of streaming nature. Streaming data refers to multimedia data which are constantly received by and presented to an end-user while being delivered by a provider. In one embodiment, detection of streaming nature of a packet is done by analyzing packet size and packet interarrival times per destination address, where packet interarrival time is the time between successive packet arrivals. According to one embodiment other techniques could also be used.

Once a streaming packet is detected, it is stored in a buffer memory based on packet destination address. In one embodiment, it is provided one buffer memory per packet flow destination address.

Packets stored in the buffer memories are then processed to be sent to the clients in groups. According to different embodiments of the invention, the packets can be processed in different ways:
- each of the buffers stores packets until reaching a certain number of packets. Once the certain number of packets is reached, the content of the buffer is sent to the wireless interface. Thus, clients received the content of a complete buffer one after the other.
- in one embodiment, each of the buffers stores a certain number of packets and build a new larger packet based on stored packets plus a packet grouping header added at the beginning. Said packet grouping header indicates the number of packets and the destination address. The larger packet is sent to the clients, who are required to have the means to, upon the larger packet arrival, read the header and split said larger packet into the original smaller ones before they are delivered to the video processing.

Therefore, the proposed solution produces a significant increase of throughput performance by preprocessing the packet flows, so the other enhancement mechanisms defined in 802.11e specification work at their maximum effectiveness point. It is envisioned as well the possibility to be used in concatenation with the mechanisms introduced in amendment 802.11aa for multicast video transmissions over wifi and 802.11e for QoS, in particular for video, to build a highly efficient transmission systems over 802.11 family of standards.

The proposed solution adds some delay which is small enough to be acceptable for the majority of current applications. Additionally, the effect on the jitter is limited and compatible with the existing services.

Multimedia or media data refer to digital content that uses a combination of different content forms, mainly audio and video, but it may also comprise text, images, animation or interactive content

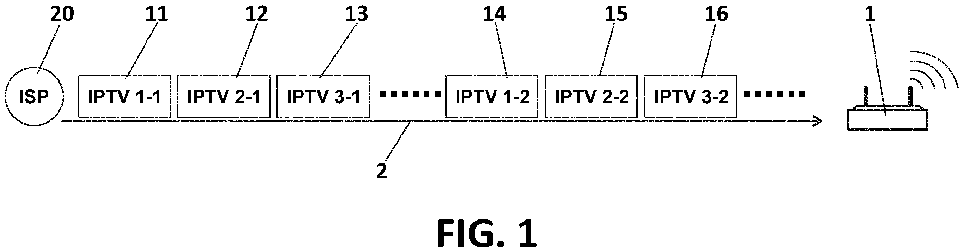

**Figure 1** shows a schematic view of a distributing electronic device (1), for example a residential gateway, which is receiving a data packets flow (2) containing an IPTV packets flow (11, 12, 13, 14, 15, 16) from an Internet service provider (20). The distributing electronic device plays the role of a network access device, providing multiple access to the services of the provider.

In the embodiment of figure 1 the maximum size is approximately 1346 bytes (7 video frames of 188 bytes + a realtime protocol header), but other kind of video packets or sizes would be suitable. These frames go to different wireless clients, IPTV1 to IPTV3, as shown in figure 1.

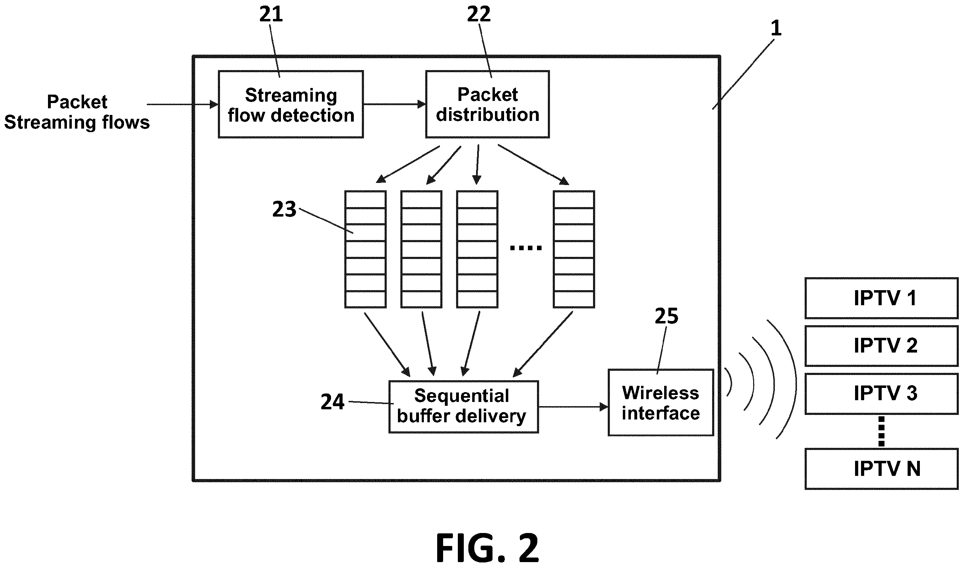

**Figure 2** shows a block diagram of media packet distribution carried out by a residential gateway device (1) serving to multiple clients IPTV1, IPTV2, IPTV3... IPTVn. According to one embodiment of proposed solution, once the packet flow is received by the residential gateway device, the packet flow is analyzed to detect (21) continuous streaming flows. For example, in one embodiment of proposed solution, detection of continuous streaming flows is based on statistical analysis of packet sizes and interarrival times together with the destination addresses.

Packets identified as media streaming packets, which are packets belonging to a streaming flow, are then distributed (22) in buffer memories (23) according to their destination address as shown in Figure 2. The packets are stored in the buffer memories until the number of stored packets in a buffer has reached a predefined maximum (for instance 8 packets). When the buffer reaches the predefined maximum number of packets, the complete content of the buffer is delivered (24) to the wireless interface (25), which finally distributes received groups of packets to wireless clients IPTV1, IPTV2, IPTV3... IPTVn.

In one embodiment of proposed solution, the sequential buffer delivery (24) also adds a common header to the groups of packets before delivering them to the wireless interface. In this case, if the packets are grouped with a header, the wireless clients receiving said groups of packets are provided with the necessary means to remove the header and split the bigger packet into the original smaller ones.

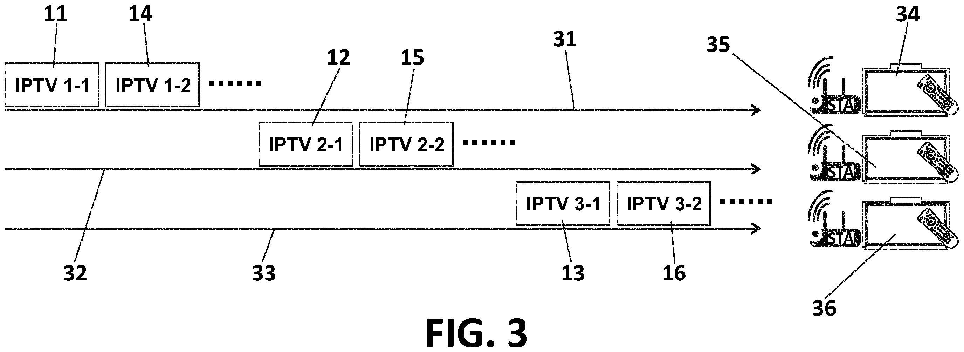

**Figure 3** schematically represents the outcome of the process describe above. IPTV data packets flow of figure 1 results in a bunch of streaming packet flows (31, 32, 33), where packets are grouped and sorted by its destination address. Thus, each of the stations (34, 35, 36) connected to the residential gateway device of proposed solution receives its corresponding packets in a grouped form. In this case, packet flow 31 contains IPTV packets 11 and 14, which were addressed to the station 34 belonging to one of the wireless clients connected to the residential gateway device. Packet flow 32 contains IPTV packets 12 and 15, which were addressed to the station 35 belonging to another wireless client connected to the same residential gateway device distributing the video packets. And packet flow 33 contains IPTV packets 13 and 16, which were addressed to the station 36 belonging to another wireless client connected to the same residential gateway device.

The stations may be for example a set-top box (STB), a laptop, a desktop PC, PDA, access point, Wi-Fi phone or any other similar electronic device.

Although the figures show the packets happening in a sorted sequential manner, the media streaming packets could come in random times.

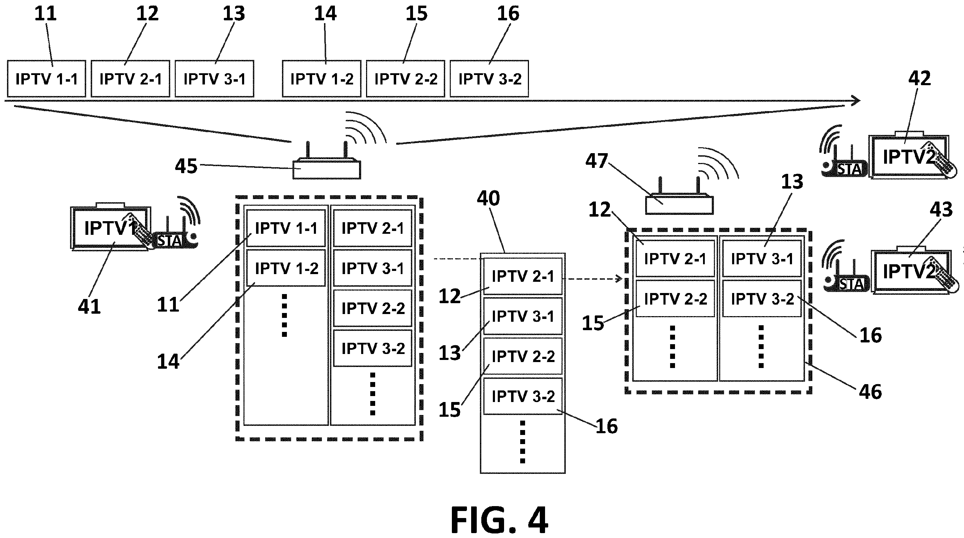

**Figure 4** is a schematic view of one particular embodiment of proposed solution where the wireless system comprises a meshed network built with a combination of radio access points (40). Each of the access points of the meshed is provided with the functionality described above. Thus, detection of media streaming packets from an input packet flow is carried out as described above. However, the IPTV packets (11-16) reaching the distributing device, for example a residential gateway device (45), are now distributed among buffer memories based on whether destination address are local clients.

In the embodiment of figure 4, station 41 belongs to a local client served by the residential gateway device, while stations 42 and 43 belong to clients served by access point 40. In this case, the buffer memories of residential gateway device 40 store IPTV packets for the local client 41 and for the backbone connections to other Access Points (access point 40) separately as shown in figure 4. Namely, packets with a link destination to a local client are stored in a separate buffer (one buffer for each local client) and the rest are grouped together and stored in a different buffer memory for the backbone connections to be sent to the next access point. Then, packets 12, 13, 15 and 16 are received by the next access point (40) grouped from the backbone. The access point regroups (46) the packets per destination and separates packets 12 and 15, which are addressed to station 42, from packets 13 and 16, which are addressed to the station 43. Finally, the access point sends (47) the regrouped packets to its corresponding station in a grouped form.

The buffer memory for the backbone connections is not necessary storing consecutive packets for any given client, but a group of packets that are to be sent to another Access Point.

In one embodiment of proposed solution, the buffer memory including wireless mesh backbone packets, always sends said packets first to reduce the propagation of delays through the network when several wireless hops are present.

In one embodiment of proposed solution, the Ethernet based wire connection is used as a point to point connection otherwise, i.e. as part of an Ethernet LAN. In this case, same functionality is provided as if a wireless connection were used since the Ethernet media would also be suffering from resource allocation limitations. These access points will support at least jumbo frames for effective use of the media.

Although the above example is based on the transmission of IPTV packets, the same principle can be applied to the optimal transmission of other services like file transfers. In addition, in the case that IPTV packets are combined with other type of packets for the same destination, proposed solution behaves transparently even if those packets are stored together with the IPTV ones.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be further appreciated by those skilled in the art that any block diagrams herein represent conceptual views of particular embodiments. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

## Claims

1. Method for media packet distribution over a multiple access wireless communication network, performed by a distributing electronic device (1), comprising:
a) receiving a data packets flow (2) addressed to two or more different destination addresses (34-36);
b) determining whether each packet of the received data packets flow is a media streaming packet (11-16);
c) storing media streaming packets in buffer memories (23) based on the destination address of each media streaming packet;
d) sending consecutively all the media streaming packets stored in a buffer memory to a given destination address in response to said buffer memory reaching a predefined maximum number of stored media streaming packets.

2. Method according to claim 1 wherein determining whether a packet is a media streaming packet is based on statistical analysis of packet size and packet interarrival times per destination address.

3. Method according to one of claims 1 to 2 wherein sending all the media streaming packets stored in a buffer memory to a given destination address comprises determining and sending a new packet including a common header and the media streaming packets, wherein said common header indicates a number of media streaming packets and a destination address.

4. Method according to one of claims 1 to 3 wherein storing media streaming packets in buffer memories based on the destination address of each media streaming packet comprises storing media streaming packets with a non-local destination addresses (42, 43) together in a certain buffer memory.

5. Method according to claim 4 wherein the certain buffer memory containing media streaming packets with a non-local destination address has preference to be sent to another access point of the multiple access wireless communication network before buffer memories containing media streaming packets with local destination addresses.

6. Method according to one of claims 1-5 wherein the wireless communication network complies with 802.11e specification.

7. Computer program comprising instructions for performing all the steps of the method of one of claims 1 to 6 when said instructions are executed by a computer.

8. Distributing electronic device (1) for media packet distribution over a multiple access wireless communication network, comprising means configured for:
- receiving a data packets flow addressed to two or more different destination addresses;
- determining whether each packet of the received data packet flow is a media streaming packet;
- storing each media streaming packet in buffer memories based on the destination address of each media streaming packet;
- sending all the media streaming packets stored in a buffer memory to a given destination address, when said buffer memory reaches a predefined maximum number of stored media streaming packets.

9. Distributing electronic device according to claim 8 wherein determining whether a packet is a media streaming packet is based on statistical analysis of packet size and packet interarrival times per destination address.

10. Distributing electronic device according to one of claims 8 to 9 wherein sending all the media streaming packets stored in a buffer memory to a given destination address comprises adding a common header to the all media streaming packets, wherein said packet common header indicates a number of packets and a destination address.

11. Distributing electronic device according to one of claims 8 to 10 wherein storing media streaming packets in buffer memories based on the destination address of each media streaming packet comprises storing media streaming packets with a non-local destination addresses (42, 43) together in a certain buffer memory.

12. Distributing electronic device according to one of claims 8 to 11 wherein the certain buffer memory containing media streaming packets with a non-local destination address has preference to be sent to another access point of the multiple access wireless communication network before buffer memories containing media streaming packets with local destination addresses.

13. Distributing electronic device according to one of claims 8 to 12 wherein the wireless communication network complies with 802.11e specification.

14. System comprising at least one distribution electronic device (1) according to one of claims 8 to 13.

## Patentansprüche

1. Verfahren zur Verteilung von Medienpaketen über ein drahtloses Kommunikationsnetz mit Mehrfachzugriff, das von einer verteilenden elektronischen Vorrichtung (1) durchgeführt wird, umfassend:
a) Empfangen eines Datenpaketflusses (2), der an zwei oder mehr verschiedene Zieladressen (34-36) adressiert ist;
b) Bestimmen, ob jedes Paket des empfangenen Datenpaketflusses ein Medien-Streaming-Paket (11-16) ist;
c) Speichern von Medien-Streaming-Paketen in Pufferspeichern (23) auf der Grundlage der Zieladresse jedes Medien-Streaming-Pakets;
d) aufeinanderfolgendes Senden aller Medien-Streaming-Pakete, die in einem Pufferspeicher gespeichert sind, an eine gegebene Zieladresse als Reaktion darauf, dass der Pufferspeicher eine vordefinierte maximale Anzahl von gespeicherten Medien-Streaming-Paketen erreicht.

2. Verfahren nach Anspruch 1, wobei das Bestimmen, ob ein Paket ein Medien-Streaming-Paket ist, auf einer statistischen Analyse der Paketgröße und der Paket-Zwischenankunftszeiten pro Zieladresse basiert.

3. Verfahren nach einem der Ansprüche 1 bis 2, wobei das Senden aller Medien-Streaming-Pakete, die in einem Pufferspeicher gespeichert sind, an eine gegebene Zieladresse das Bestimmen und Senden eines neuen Pakets mit einem gemeinsamen Header und den Medien-Streaming-Paketen umfasst, wobei der gemeinsame Header eine Anzahl von Medien-Streaming-Paketen und eine Zieladresse angibt.

4. Verfahren nach einem der Ansprüche 1 bis 3, wobei das Speichern von Medien-Streaming-Paketen in Pufferspeichern auf der Grundlage der Zieladresse jedes Medien-Streaming-Pakets das gemeinsame Speichern von Medien-Streaming-Paketen mit einer nicht-lokalen Zieladresse (42, 43) in einem bestimmten Pufferspeicher umfasst.

5. Verfahren nach Anspruch 4, wobei der bestimmte Pufferspeicher, der Medien-Streaming-Pakete mit einer nicht-lokalen Zieladresse enthält, mit Vorrang vor Pufferspeichern, die Medien-Streaming-Pakete mit lokalen Zieladressen enthalten, an einen anderen Zugangspunkt des drahtlosen Kommunikationsnetzwerks mit Mehrfachzugriff gesendet wird.

6. Verfahren nach einem der Ansprüche 1-5, wobei das drahtlose Kommunikationsnetz der Spezifikation 802.11 e entspricht.

7. Computerprogramm mit Befehlen zur Durchführung aller Schritte des Verfahrens nach einem der Ansprüche 1 bis 6, wenn die Befehle von einem Computer ausgeführt werden.

8. Verteilende elektronische Vorrichtung (1) zur Verteilung von Medienpaketen über ein drahtloses Kommunikationsnetz mit Mehrfachzugriff, mit Mitteln, die konfiguriert sind zum:
- Empfangen eines Datenpaketflusses, der an zwei oder mehr verschiedene Zieladressen adressiert ist;
- Bestimmen, ob jedes Paket des empfangenen Datenpaketflusses ein Medien-Streaming-Paket ist;
- Speichern jedes Medien-Streaming-Pakets in Pufferspeichern auf der Grundlage der Zieladresse jedes Medien-Streaming-Pakets;
- Senden aller Medien-Streaming-Pakete, die in einem Pufferspeicher gespeichert sind, an eine gegebene Zieladresse, wenn der Pufferspeicher eine vordefinierte maximale Anzahl von gespeicherten Medien-Streaming-Paketen erreicht.

9. Verteilende elektronische Vorrichtung nach Anspruch 8, wobei das Bestimmen, ob ein Paket ein Medien-Streaming-Paket ist, auf der statistischen Analyse der Paketgröße und der Paket-Zwischenankunftszeiten pro Zieladresse basiert.

10. Verteilende elektronische Vorrichtung nach einem der Ansprüche 8 bis 9, wobei das Senden aller Medien-Streaming-Pakete, die in einem Pufferspeicher gespeichert sind, an eine gegebene Zieladresse das Hinzufügen eines gemeinsamen Headers zu allen Medien-Streaming-Paketen umfasst, wobei der gemeinsame Header des Pakets eine Anzahl von Paketen und eine Zieladresse angibt.

11. Verteilende elektronische Vorrichtung nach einem der Ansprüche 8 bis 10, wobei das Speichern von Medien-Streaming-Paketen in Pufferspeichern auf der Grundlage der Zieladresse jedes Medien-Streaming-Pakets das gemeinsame Speichern von Medien-Streaming-Paketen mit einer nicht-lokalen Zieladresse (42, 43) in einem bestimmten Pufferspeicher umfasst.

12. Verteilende elektronische Vorrichtung nach einem der Ansprüche 8 bis 11, wobei der bestimmte Pufferspeicher, der Medien-Streaming-Pakete mit einer nicht-lokalen Zieladresse enthält, mit Vorrang vor Pufferspeichern, die Medien-Streaming-Pakete mit lokalen Zieladressen enthalten, an einen anderen Zugangspunkt des drahtlosen Kommunikationsnetzes mit Mehrfachzugriff gesendet wird.

13. Verteilende elektronische Vorrichtung nach einem der Ansprüche 8 bis 12, wobei das drahtlose Kommunikationsnetzwerk die 802.11e-Spezifikation erfüllt.

14. System aufweisend mindestens eine verteilende elektronische Vorrichtung (1) nach einem der Ansprüche 8 bis 13.

## Revendications

1. Procédé pour une distribution de paquets multimédias sur un réseau de communication sans fil à accès multiple, mis en œuvre par un dispositif électronique distributeur (1), comprenant :
a) la réception d'un flux de paquets de données (2) adressé à deux adresses de destination différentes ou plus (34-36) ;
b) la détermination quant à savoir si chaque paquet du flux de paquets de données reçu est un paquet de transmission multimédia en continu (11-16) ;
c) le stockage de paquets de transmission multimédia en continu dans des mémoires tampons (23) sur la base de l'adresse de destination de chaque paquet de transmission multimédia en continu ;
d) l'envoi consécutivement de tous les paquets de transmission multimédia en continu stockés dans une mémoire tampon à une adresse de destination donnée en réponse au fait que ladite mémoire tampon atteint un nombre maximal prédéfini de paquets de transmission multimédia en continu stockés.

2. Procédé selon la revendication 1 dans lequel la détermination quant à savoir si un paquet est un paquet de transmission multimédia en continu est basée sur une analyse statistique de taille de paquet et de durées entre arrivées de paquets par adresse de destination.

3. Procédé selon l'une des revendications 1 à 2 dans lequel l'envoi de tous les paquets de transmission multimédia en continu stockés dans une mémoire tampon à une adresse de destination donnée comprend la détermination et l'envoi d'un nouveau paquet incluant un en-tête commun et des paquets de transmission multimédia en continu, ledit en-tête commun indiquant un nombre de paquets de transmission multimédia en continu et une adresse de destination.

4. Procédé selon l'une des revendications 1 à 3 dans lequel le stockage de paquets de transmission multimédia en continu dans des mémoires tampons sur la base de l'adresse de destination de chaque paquet de transmission multimédia en continu comprend le stockage de paquets de transmission multimédia en continu ayant une adresse de destination non locale (42, 43) l'un avec l'autre dans une certaine mémoire tampon.

5. Procédé selon la revendication 4 dans lequel la certaine mémoire tampon contenant des paquets de transmission multimédia en continu ayant une adresse de destination non locale a la préférence pour être envoyée à un autre point d'accès du réseau de communication sans fil à accès multiple avant des mémoires tampons contenant des paquets de transmission multimédia en continu ayant des adresses de destination locales.

6. Procédé selon l'une des revendications 1 à 5 dans lequel le réseau de communication sans fil est conforme à la spécification 802.11e.

7. Programme d'ordinateur comprenant des instructions pour mettre en œuvre toutes les étapes du procédé de l'une des revendications 1 à 6 lorsque lesdites instructions sont exécutées par un ordinateur.

8. Dispositif électronique distributeur (1) pour une distribution de paquets multimédias sur un réseau de communication sans fil à accès multiple, comprenant des moyens configurés pour :
- la réception d'un flux de paquets de données adressé à deux adresses de destination différentes ou plus ;
- la détermination quant à savoir si chaque paquet du flux de paquets de données reçu est un paquet de transmission multimédia en continu ;
- le stockage de chaque paquet de transmission multimédia en continu dans des mémoires tampons sur la base de l'adresse de destination de chaque paquet de transmission multimédia en continu ;
- l'envoi de tous les paquets de transmission multimédia en continu stockés dans une mémoire tampon à une adresse de destination donnée, lorsque ladite mémoire tampon atteint un nombre maximal prédéfini de paquets de transmission multimédia en continu stockés.

9. Dispositif électronique distributeur selon la revendication 8 dans lequel la détermination quant à savoir si un paquet est un paquet de transmission multimédia en continu est basée sur une analyse statistique de taille de paquet et de durées entre arrivées de paquets par adresse de destination.

10. Dispositif électronique distributeur selon l'une des revendications 8 à 9 dans lequel l'envoi de tous les paquets de transmission multimédia en continu stockés dans une mémoire tampon à une adresse de destination donnée comprend l'ajout d'un en-tête commun à tous ces paquets de transmission multimédia en continu, ledit en-tête commun de paquets indiquant un nombre de paquets et une adresse de destination.

11. Dispositif électronique distributeur selon l'une des revendications 8 à 10 dans lequel le stockage de paquets de transmission multimédia en continu dans des mémoires tampons sur la base de l'adresse de destination de chaque paquet de transmission multimédia en continu comprend le stockage de paquets de transmission multimédia en continu ayant une adresse de destination non locale (42, 43) l'un avec l'autre dans une certaine mémoire tampon.

12. Dispositif électronique distributeur selon l'une des revendications 8 à 11 dans lequel la certaine mémoire tampon contenant des paquets de transmission multimédia en continu ayant une adresse de destination non locale a la préférence pour être envoyée à un autre point d'accès du réseau de communication sans fil à accès multiple avant des mémoires tampons contenant des paquets de transmission multimédia en continu ayant des adresses de destination locales.

13. Dispositif électronique distributeur selon l'une des revendications 8 à 12 dans lequel le réseau de communication sans fil est conforme à la spécification 802.11e.

14. Système comprenant au moins un dispositif électronique de distribution (1) selon l'une des revendications 8 à 13.
